(19) Europäisches Patentamt
European Patent Office
Office européen des brevets

(11) **EP 2 957 728 A1**

(12) **EUROPEAN PATENT APPLICATION**

(43) Date of publication:
**23.12.2015 Bulletin 2015/52**

(51) Int Cl.:
*F01D 11/24* (2006.01)     *F28F 13/02* (2006.01)
*F28F 13/18* (2006.01)

(21) Application number: **14173008.5**

(22) Date of filing: **18.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Rolls-Royce Deutschland Ltd & Co KG 15827 Blankenfelde-Mahlow (DE)**

(72) Inventor: **Teia Dos Santos Mendes Gomes, Luis Daniel 10115 Berlin (DE)**

(74) Representative: **Maikowski & Ninnemann Postfach 15 09 20 10671 Berlin (DE)**

(54) **Heat transfer device and method for manufacturing a heat exchange device**

(57)     The invention relates to a heat transfer device in an aircraft turbo engine (100), wherein a structure section (2) of the turbo engine (100) comprises surface structure elements (1) to increase the heat transfer area (A) of the structure section (2) and / or to improve the heat transfer (h) from the structure section (2) of the turbo engine (100) to a fluid flow, in particular an air flow (L). The invention also relates to a method to manufacture a heat transfer device.

Fig. 1

EP 2 957 728 A1

## Description

The invention relates to a heat transfer device according to claim 1, and a method for manufacturing a heat transfer device according to claim 9.

During operation of an aircraft engine, heat is dissipated, e.g., through walls of the high pressure turbine casing. The heat load causes the casing to expand and / or contract. The casing expansion increases a gap to blade tips, deteriorating the engine performance, while casing contraction causes the blade's tips to rub, or even lock, deteriorating engine integrity and hence safety.

Therefore devices are required to help control the heat transfer, and also methods for producing such devices.

This is addressed by a heat transfer device with the features of claim 1.

A heat transfer device in an aircraft turbo engine comprises surface structure elements to increase the heat transfer area of a structure section of the turbo engine and / or to improve the heat transfer (i.e. increasing the overall heat transfer coefficient) from the structure section of the turbo engine to a fluid flow, in particular an air flow. The surface structure element can either act on the heat transfer or the flow pattern, but in many cases the interaction will be on both.

In one embodiment of the heat transfer device the surface structure elements comprise a rib structure, a needle structure, a dimple structure and / or a mound structure protruding from the structure section into the fluid flow, in particular the air flow. A dimple structure e.g. comprises a plurality of depressions into a surface (i.e. the surface of the structure section), whereas a mound structure e.g. comprises a plurality of protrusions from a surface (i.e. the surface of the structure section). In both cases the area of the surface is increased. The flow pattern is also influenced.

In an embodiment the structure section of the turbo engine with the plurality of the surface structure elements is on the casing of the turbine, in particular a low pressure turbine, an intermediate turbine and / or a high pressure turbine, a honeycomb structure, a valve, a sensor, solenoids, shielded cables, combustion chambers, turbine blades, engine harnesses and / or an environmental control system. All these allow and / or require thermal management.

In a further embodiment of the heat transfer device the surface structure elements are distributed in a pattern, in particular a regular pattern on the structure section of the turbo engine. A plurality of the surface structure elements increases the heat transfer area considerably. If the surface structure elements are positioned in a pattern, the flow - and hence the turbulence - can be affected in a controlled manner. The pattern of the surface structure elements does not necessarily has to be uniform, it can also be matched to the heat load of a particular structure section in the aircraft turbo engine. The pattern can e.g. designed to prevent or control of an ovalling of the casing due to a non-uniform circumferential flow distribution. The pattern and the flow distribution influences the heat transfer coefficient. Given e.g. a fixed flow distribution, the variation in the heat transfer can be counteracted by an appropriate pattern giving a constant heat transfer rate. The pattern can have surface structure elements which can e.g. vary in sizes and / or in the density on the surface.

If the surface structure elements have a characteristic width between 1 mm and 10 mm, in particular between 1 mm and 5 mm, and / or a characteristic height between 0,2 mm to 5 mm, in particular between 0,5 mm and 2 mm the amount of material which is added to aircraft turbo engine is relatively small, even if a dense pattern is used. Alternatively or in addition the height to width ratio of the surface structure elements has a height to width ratio between 0,25 and 0,5.

Since the temperatures and stresses in particular around the turbine in the aircraft engine are high, solidified metal (e.g. also an alloy), in particular titanium or aluminum can be used as material for manufacturing the surface structure elements. The metal can be molten or partially molten when the metal is contacting the surface. The solidification of the metal takes place on the surface. The melting temperature of the solidified metal should be sufficiently above the hottest temperature in the particular design of the aircraft engine.

In the hot regions of an aircraft turbo engine, the gap between the blades (be it compressor or turbine blades) is an important parameter, which should be neither to large (results in inefficient engine) nor too small (probable damage). Therefore, an embodiment of the heat transfer device can be a part of a tip clearance control system.

The problem is also addressed by a method with the features of claim 9. Here a heat transfer device can be manufactured by

a) heating at least one metal particle, in particular a spherical particle to a temperature at least partially above the melting point of that metal, then the at least one, at least partially molten metal particle is positioned on a structure section of the turbo engine so that

b) the at least partially molten particle solidifies on the structure section of the turbo engine to form at least one surface structure element on the structure section.

This method can be applied to an already existing aircraft turbo engine or a structure of the turbo engine. The surface itself does not need to be mechanically altered. Unlike machining the surface, this method does not create stress concentration points or edges that could weaken the part strength and potentially jeopardize its integrity during operation.

One efficient way to heat the at least one metal particle, is the use of a heating device, in particular a radiative heater. Alternatively or in addition a heating process (e.g. a laser process) is used on the location at the structure surface.

The at least one metal particle can be transported to the structure section in the turbo engine by a force field, e.g. the earth's gravity field, an artificial gravitational field (e.g. created by rotation), and / or a magnetic field. It is also possible that the particles could be moved under a centrifugal force field. In particular the at least one metal particle is in free fall at least partially before the solidification, in particular it is in free fall in the radiative heater.

To position more than one surface structure element in one embodiment there is a relative movement of the structure section between the solidification of two molten metal particles into surface structure elements on the structure section. It is also possible that a pattern, in particular a regular pattern of solidified metal particles is formed as a plurality of surface structure elements on the structure section of the turbo engine.

To position a particle on a specific location for the structure section there can be a generation of a relative movement between the at least one particle and the structure section; the relative movement being generated by a positioning device and / or a force field, in particular earth's gravity field, an artificial gravity field and / or a magnetic field.

Embodiments of the invention are described exemplary in the following figures.

Fig. 1     shows a schematic view of an aircraft engine;

Fig. 2a    shows a casing for a high pressure turbine from the prior art;

Fig. 2b    shows an embodiment of a casing with surface structure elements;

Fig. 3     shows a comparison of velocities and temperatures for a casing with a smooth surface (a) and surface with surface structure elements (b);

Fig. 4     details of a temperature profiles taken from Fig. 3;

Fig. 5     shows a comparison of near-wall turbulence intensity for a casing with a smooth surface (a) and a surface with surface structure elements (b);

Fig. 6     details of near-wall turbulence intensity profiles taken from Fig. 5;

Fig. 7     shows a schematic overview of an embodiment of the method to manufacture a heat transfer element;

Fig. 8     shows a schematic overview of a further embodiment of the method to manufacture a heat transfer element, in particular on a honeycomb structure;

Fig. 9     shows a schematic overview of a further embodiment of the method to manufacture a heat transfer element with electromagnetic means to control the surface structure elements.

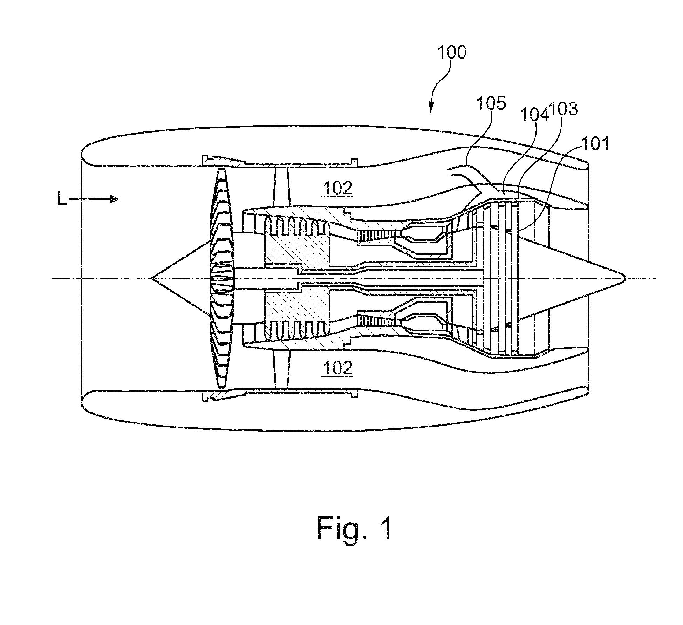

In Fig. 1 a cross-section and schematic view of a turbofan aircraft engine 100 is shown. The incoming air L is partially flowing through a bypass duct 102. The turbo engine 100 shown here has one turbine 101 which is surrounded by a casing 103. Since in the structure section of the turbine, the heat load is considerable, the casing 103 in this structure section becomes hot. In other embodiments of the aircraft turbo engine 100, more than one turbine stage is used. In particular a two-turbine configuration (high pressure turbine, low pressure turbine) or a three-turbine combination (high pressure turbine, intermediate pressure turbine, high pressure turbine) are used.

The high pressure turbine 101 and other rotary and stationary parts of the aircraft engine 100 are surrounded by the casing 103 which itself is surrounded by a bypass duct 102 carrying relatively cold air L. In the embodiment shown in Fig 1 a scoop device 105 is shown which channels cold air L into an annular space 104 around the casing 103. In other embodiments the cold air L is taken alternatively or in addition from the outside of the turbo engine 100, i.e. the free air flow around the turbo engine 100 or from a compressor of the turbo engine 100.

One reason for a thermal management is the control of the expansion / contraction of the casing 103 under different heat loads. If the casing 103 expands too much, the gap between the turbine 101 blades and the casing 103 is getting too big, resulting in an inefficient aircraft turbo engine 100. If the casing 103 contracts, there is the risk that the tips of turbine 101 blades might collide and / or lock with the casing 103 resulting in a failure of the turbo engine 100.

In the following embodiments of a heat transfer device are shown which is implemented in connection with a turbine casing 103 or other structures of the turbine engine 100 in the aircraft engine 100.

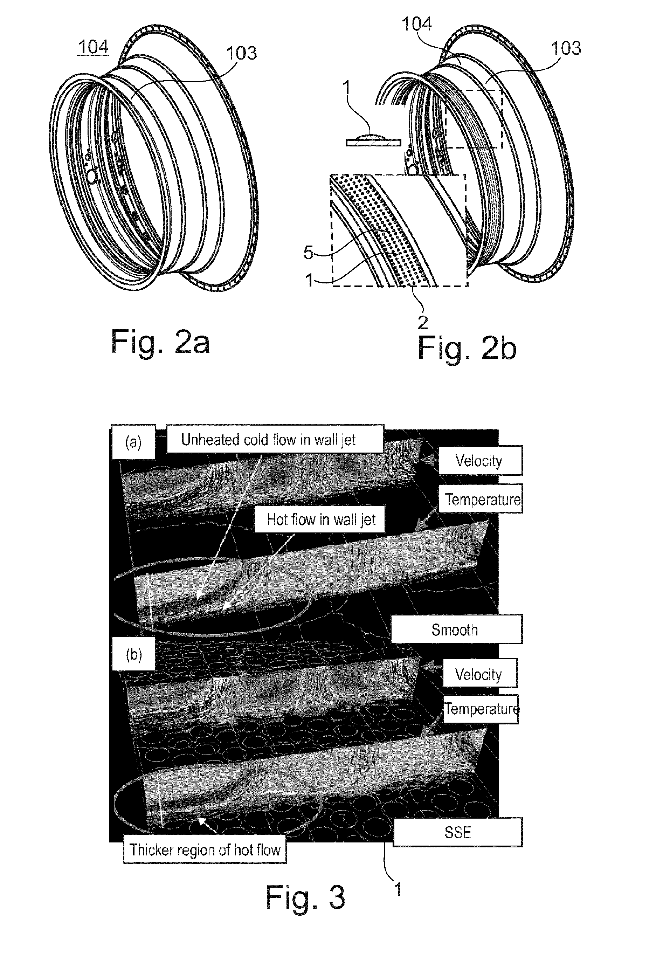

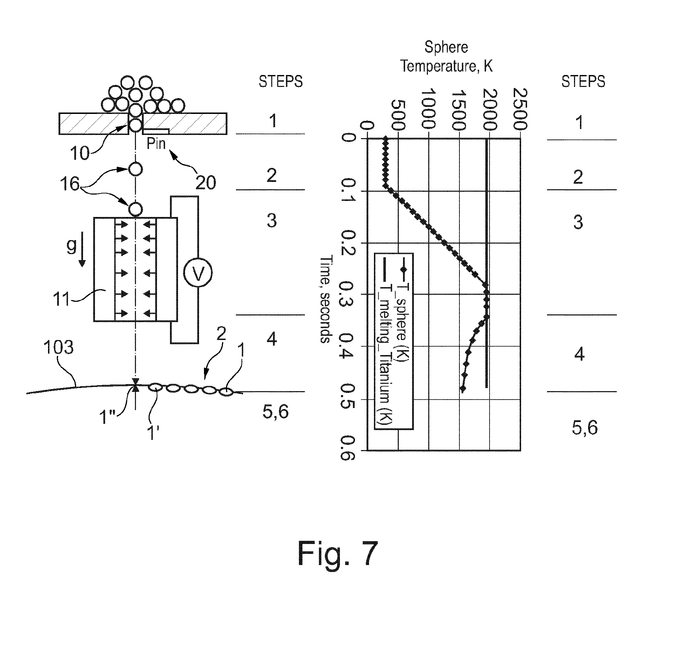

The heat transfer device comprises surface structure elements 1 (see Fig. 2b, 3) which in the embodiment shown here are formed by solidifying droplets on a structure section 2 of turbo engine 100 (methods to achieve this are shown in Fig. 7 to 9).

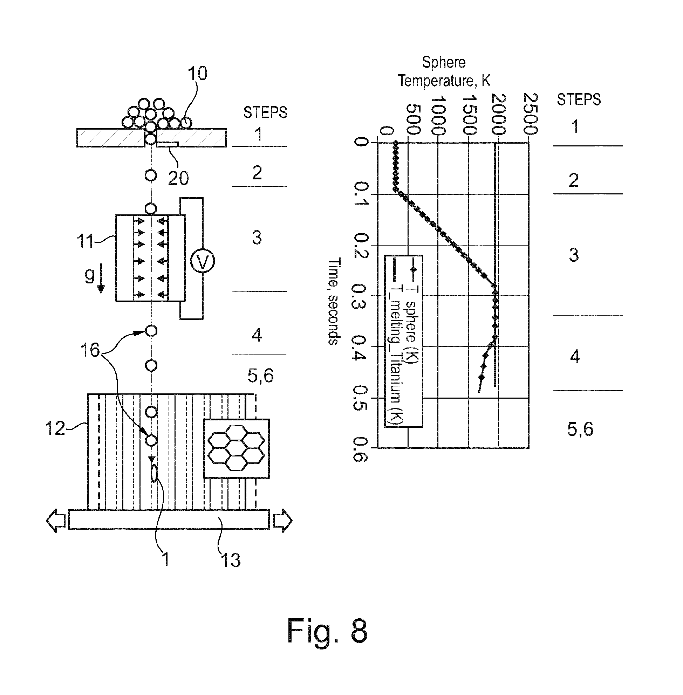

In other embodiments an aircraft environmental control system, a honeycomb structure (see e.g. Fig. 8), solenoids, shielded cables, combustion chambers, turbine blades, electronic devices and / or engine harnesses could be used together with surface structure elements 1.

Fig. 2A shows a perspective view of a casing 103 of a turbine 101, in particular a high pressure turbine known in the prior art. The turbine 101 itself is not shown in this view. The heat generated by the turbine 101 is transferred across the casing 103 into an annular space 104 around the high pressure turbine 101. This annular space 104 is convectively cooled by cold air L scooped, e.g., from the bypass duct 102 as, e.g., shown in Fig. 1.

In an embodiment shown in Fig. 2b with an enlarged inset the casing 103 comprises a structure section 2 with a plurality of surface structure elements 1 extending around a part of the casing 103. The structure section 2 with the surface structure elements 1 form the heat transfer device. The surface structure elements 1 are here arranged in a regular, rectangular grid. The surface structure elements 1 in this example have a shape of a round, flat disk (mound structure) which is caused when a spherical droplet solidifies on the casing 103 (see Fig. 7 to 9).

In other embodiments, other pattern or even pattern-less (e.g. random) arrangements of the surface structure elements 1 are used. In other embodiments the surface structure elements 1 extend only around a part of the casing 103 or cover the whole casing 103.

As will be explained below, the surface structure elements 1 in this embodiment are solidified droplets, the dimensions are shown in the inset of Fig. 2b. The side structure section shows that the surface structure elements 1 have in this example a diameter of about 3 mm and a height of about 1 mm. Typically the surface structure elements 1 can have characteristic diameters of 1 to 10 mm and / or characteristic heights of 0, 2 to 5 mm. Another measure describing the geometry of the surface structure elements 1 is the ratio of height to width (e.g. the characteristic width relative to the flow regime). The value of that ratio can e.g. vary between 0,25 and 0,5.

The characteristic dimensions are the ones which have an impact on the fluid flow around the surface structure elements 1.

In other embodiments the size and / or the height of the surface structure elements 1 and / or the pattern can be adapted to the required heat transfer, so that the pattern is not uniform. The pattern can be, e.g., denser in certain areas than others.

Here the surface structure elements 1 are conveniently clustered under manifold holes (not shown in Fig. 2b). The surface structure elements 1 perform at least one of the following functions: increasing the casing 103 exposed area for cooling purposes and / or increasing the turbulence of the cooling airflow L in the annular space 104.

Heat transfer by convection is governed by

$$Q = Ah(T_S - T_\infty)$$

where Q is the heat rate, A is the casing 103 surface area in the region of the structure section 2, h is the heat transfer coefficient (which increases as the cooling air flow L becomes more turbulent), $T_s$ the surface temperature of the casing 103 and $T_\infty$ the flow temperature of the cooling air L. In this case the surface structure elements 1 affect the heat transfer coefficient h and the area A at the same time.

In the example shown in Fig. 2b, the heat transfer area increases by 16% through the use of the surface structure elements 1. The effect of the surface structure elements 1 on the turbulence is shown in Fig. 3.

Fig. 3 shows a result of a Computational Fluid Dynamics (CFD) study where the surface structuring elements 1 are in the form of solidified droplets (lower part of Fig. 3), like, e.g., shown in Fig. 2b. The surface temperature of the casing 103 is assumed to be at 800 K.

In the upper part of Fig. 3 (labelled (a)) an airflow L over a smooth surface is simulated. In the lower part of Fig. 3 (labelled (b)) the surface has been covered with surface structure elements 1 as discussed above. In both instances the temperatures are shown in the cross section in the front, the velocity of the air flow L is shown in the cross section in the back.

Comparing the temperature distribution/topology it can be seen that in the case of the surface structure elements 1 the hot region just above the surface (see areas highlighted on the left in Fig. 3) is thicker than in the case of the smooth surface. This increased hot region is due to the increased turbulence and the enlarged heat transfer area.

Immediately above the hot region is the unheated cold flow pushing the wall jet. Note that the temperature contour has been clipped to 300K to better distinguish between these two regions.

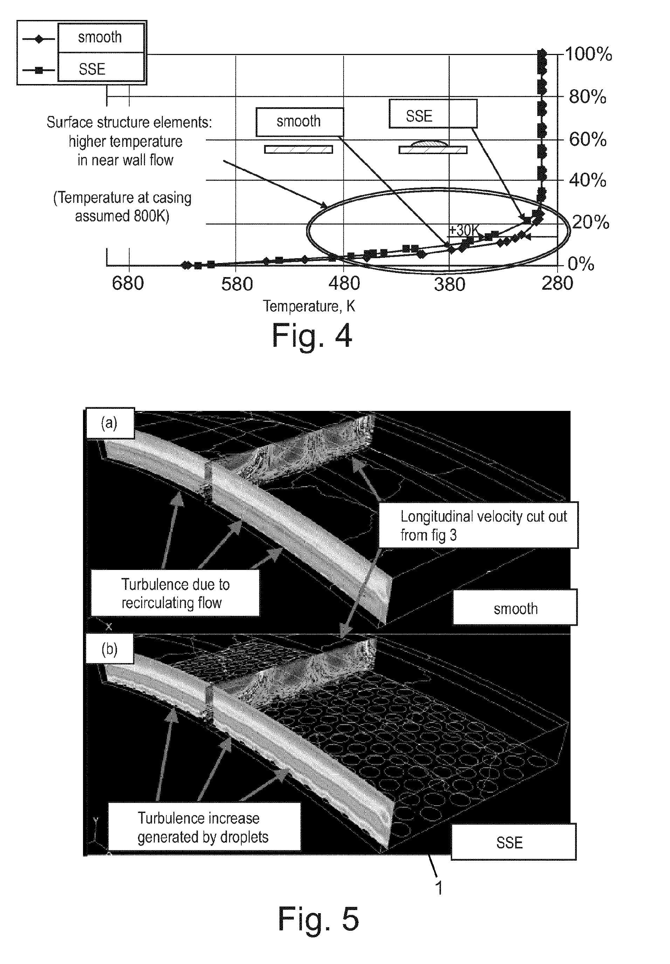

The temperature profiles at the vertical white lines on the left in Fig. 3 are shown in Fig. 4. There the difference between the smooth surface and the surface with surface structure elements 1 (termed SSE in Fig. 4) are visible.

It is noted that as one gets closer to the casing the temperature within the wall jet thermal boundary layer raises rapidly towards the casing temperature (800 K). In the presence of thermal gradients, i.e. in this example a hot surface and a cold flow, a thermal boundary layer appears. The flow at the surface is at the surface conditions, and gradually reduces away from the surface until it reaches the cold flow temperature. Figure 4 shows a thermal boundary layer.

Fig. 5 shows turbulence intensity distribution/topology for the case of a smooth casing 103 (upper part (a)) and with surface structure elements 1 (lower part (b)), respectively. The velocity distribution/topology shown in Fig. 3 are indicated.

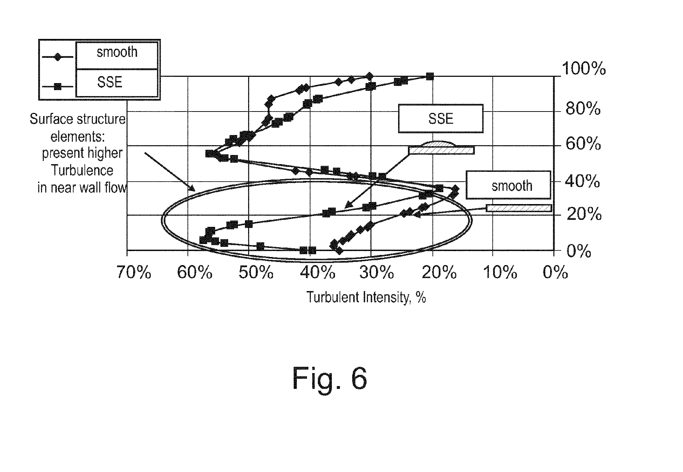

Comparing the two turbulence intensities, it can be seen that the surface structure elements 1 create a substantial amount of turbulence near the casing 103 that is not present in the smooth casing 103. This is better observed by comparing turbulent intensity profiles between the clean casing and the casing with surface structure elements 1 shown in Fig. 6.

For the smooth casing 103 configuration, the average heat flux output from the segment is 960 W/m$^2$.

For the casing 103 with surface structure elements 1 on the surface, this increases to 1200 W/m$^2$, or in other words, heat output increases by 25%. This is partially due to the 16% increased surface area A, leaving 9% due to the increased turbulence.

Assuming linear scaling, this could potentially mean that 25 % less mass flow is required to extract the same heat rate from casing.

In one embodiment, the heat transfer device is part of a tip clearing control device in which the casing 103 temperature is controlled to keep the gap between the turbine blade and the casing within the design range (tip clearance control (TCC)).

The TCC system would have to deliver only 75% of the original mass flow (i.e., smaller cold air scoops, ducts, actuator, valve etc.) resulting in a more compact and lighter TCC system.

In other embodiments the surface structure elements 1 can have a different shape i.e., rib like, protrusions, dimples and / or wavelike structures which can be welded to the casing 103 or structured by a selective laser process. The surface structure elements 1 could also be implemented during the manufacture of the casing 103 itself, e.g., during a milling process, a sintering process or a laser cladding process.

In the following embodiments of methods are described which can be used for structuring an already existing casing 103. This manufacturing approach comprises the direction of molten droplets of metal in a patterned manner to the surface of the casing 103. The molten droplets solidify upon contact, forming part of that surface and creating a surface structure element 1.

Fig. 7 shows an overview of an embodiment of the method to manufacture a heat transfer device as, e.g., used in the embodiments of Fig. 2 to 6.

The steps of a basic embodiment of the method are:

a) At least one metal particle 10 is heated so that the particle becomes (at least partially) molten (in Fig. 7 indicated as step 3).

b) The at least one, at least partially molten metal particle 16 is positioned on a structure section 2 of the turbo engine 100 so that it solidifies on the structure section 2 - here, e.g., on the casing 103 - of the turbo engine 100 to form at least one surface structure element 1 on the structure section 2 (in Fig. 7 indicated as step 5).

In another embodiment the steps a) and b) can be combined in one step by positioning the at least one particle 10 on the structure surface 2 and melt it in-situ e.g. through a laser process.

In Fig. 7 some additional steps for a manufacturing method are shown. On the left of Fig. 7 an embodiment for the manufacturing device is shown schematically. On the right a temperature diagram is shown indicating the temperature of a free falling in a gravitation field, i.e. moving particle 16 along its path towards the casing 103. The x-axis is given in time which is the falling time of the particle 16.

The steps are now described in more detail.

1. A small metal particle 10 (e.g. a sphere) is suspended in a container above the target (i.e. the casing 103). It is held in a slot by a pin or magnetic lock, being part of a particle release device 20. In the embodiment shown, the metal particles 10 are titanium spheres with a mean diameter of 2 mm. The size and shape of the particles 10 determines to a large extent the size and shape of the surface structure elements 1. The spherical particles 10 will result in the round drop-like impact pattern, which is described in connection with, e.g., Fig. 2b and 3.

2. The particle 10 is released into free fall, it accelerates pulled by earth's gravity g to a certain speed. In the embodiment shown, the moving particle 16 accelerates covering 5 cm in 0,1 seconds. The metal particle 16 in this step still has the ambient temperature. In other embodiments the metal particle 16 might be preheated.

3. The falling particle 16 goes through a heating device 11, here a cylinder emitting intense thermal radiation. After a certain time (distance) inside the heating device 11 the particle 16 has accumulated enough heat so that it becomes at least partially molten. The molten particle 16 exits the heating device 11 with a temperature at the melting point. The melting temperature under atmospheric pressure is 1953 K (for the case of Titanium) as indicated by the temperature diagram on the right hand side of the Fig. 7. This temperature diagram shows the temperature of the moving particle 16 along the trajectory of the particle 16.

In the embodiment shown, the heating device 11 comprises a copper cylinder of about 50 cm length coupled to an electrical heating. The heat transfer to the particle 16 in the heating device 11 is effected by thermal radiation. After 0,28 seconds the particle 16 is still within the heating device 11 and has reached the melting temperature. After 0,34 seconds it exits the heating device 11 as molten droplet.

4. The at least partially molten and moving particle 16 exits the heating device 11 in a molten / liquid state and falls towards the casing 103. There is a slight cooling of the molten particle 16 on the surface but the particle as a whole remains largely molten.

5. The at least partially molten particle 16 impacts the casing 103 surface, solidifying in an essentially round or oval (squashed) shape, forming a surface structure element 1 in a mound like shape on the structure section 2.

6. The casing 103 is rotated and / or translated to a new position where the next particle 10 is aligned with the next target. It is possible to use a plurality of heating devices 11 in a pattern, to generate a pattern 5 (e.g. a rectangular pattern 5 as shown in Fig. 2b) of surface structure elements 1 simultaneously.

In a further embodiment of this method it has been estimated that it would take a couple seconds to place a surface structure element 1 in the form of a solidified metal particle on the surface.

In the described embodiment the particles 16 will become completely molten, so that the molten materials solidifies on structure section 2.

In other embodiments the particle 16 only becomes partially molten at the surface, so that it retains a solid core. The partially molten particle 16 would stick to the structure section 2. When solidified the surface structure element 1 will have a different shape than a mound because the core might have some resemblance to the original shape of the particle 10. If e.g. cube shaped particles 10 are partially molten, the edges of the core will retain some of the shape of the cube which will in turn give the surface structure element 1 some shape with edges.

Furthermore, the embodiment shown in Fig. 7 uses the earth's normal gravity field gas force field to move the particles 16 through the radiative heater 11.

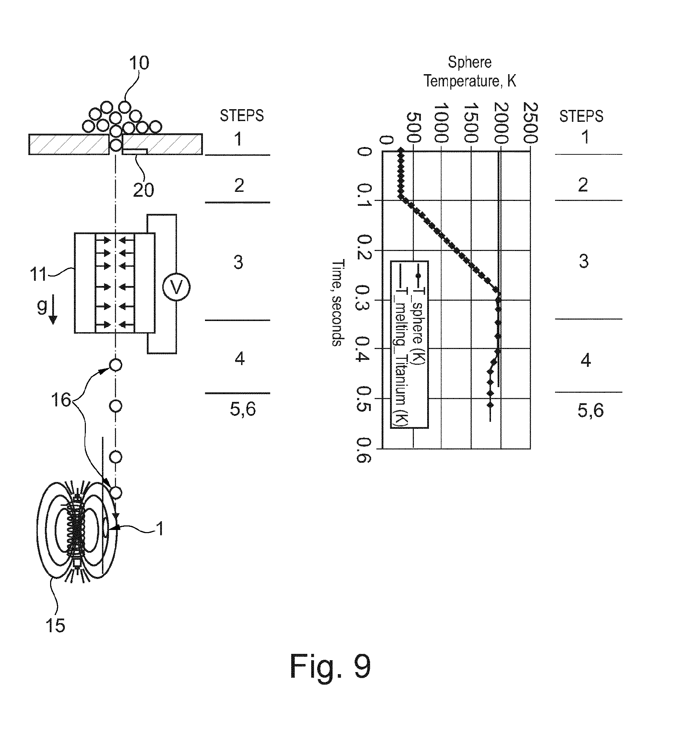

In other embodiments other force fields can be generated by a rotational movement or the particle 16 can be moved under a magnetic field (see Fig. 9). It is also possible that different force fields are used in combination together, so that the particle 16 can have complex trajectories before it solidifies on the structure section 2.

In the embodiment of Fig. 7 the location of the solidified particle on structure section 2 is straight under the drop point of the particle 10; there is no relative movement between the drop point of the particle 10 and the target structure section 2 while the particle 16 is moving. Furthermore, the force field is perpendicular to the structure section 2, so that the impact takes place after a straight movement of the particle 16.

By introducing a more variable force field (spatially and / or temporal) and / or introducing a relative movement while the falling particle 16 is moving, it is possible to provide surface structure elements 1 on more complex structure sections 2, in particular on vertical walls. In Fig. 7 it is shown that surface structure element 1' has been deposited on the section 2 before surface particle 1".

This is shown for one embodiment in an exemplary manner in Fig. 8. Here the same overall process is used as shown in Fig. 7, so that reference can be made to the description above.

In the embodiment of Fig. 8 the structure section 2 on which the particle 10 is deposited is on the side wall of a honeycomb structure 12 (see also inset in Fig. 8) which is positioned on a movable table as positioning device 13. The table can make in this embodiment sideway movements as indicated by the arrows.

When a molten particle 16 is falling into the honeycomb structure 12 the honeycomb structure 12 is moved by the positioning device 13 to the left at one point in time, so that the particle 16 becomes attached to a right hand vertical wall in the honeycomb structure 12. The point in time at which the honeycomb structure 12 is moved, can e.g. be predetermined (i.e. after a certain time period of a free falling particle 16) or it can depend on a measurement of the falling particle 16. The planar movement of the honeycomb structure 12 can adjusted so that the correct vertical wall can be structured with surface structure elements 1 along the complete length or along certain structure sections 2.

The mechanical positioning device 13 can be tilted and / or laterally moved in other embodiments.

In the shown embodiment the relative movement between the particle release device 20 and the honeycomb structure 12 is responsible of attaching surface structure elements 1 to the vertical wall. The relative movement could also be achieved by keeping the honeycomb structure 12 fixed and moving the particle release device 20 instead or a combination of those movements.

This is an example that a surface which is difficult to access within the honeycomb 12 can be structured with surface structure elements 1.

In other embodiments other structures having a less complex form than the honeycomb structure 12 can be used in connection with a particle release device 20.

The embodiment of Fig. 8 uses mechanical means for structuring a vertical wall with surface structure elements 1.

In the embodiment of Fig. 9 an electromagnetic means 15 in combination with a gravity field is used to structure the structure section 2 on the vertical wall with surface structure elements 1. Otherwise the principles of the method are the same as in the embodiments described in Fig. 7 and 8 so that reference can be made to the respective description.

Here a free falling molten (or partly molten) ferromagnetic particle 16 is subjected to a magnetic field created by the electromagnetic means 15 so that the falling particle 16 is moved sideways towards the vertical wall. Here it attaches to a structure section 2 and solidifies on the wall. By adjusting the shape of the magnetic field, the trajectory of the particle 16 can be shaped in a flexible way. It is also possible to combine the magnetic field with a mechanical positioning device 13.

By using suitable forces on the moving particle 16 it is e.g. possible to move the particle 16 around corners or to move in areas which are otherwise inaccessible.

Reference numbers

**[0072]**

1    surface structure element (SSE)
2    structure section of a turbo engine

5    pattern of surface structure elements

10    metal particles
11    heating device, radiative heater
12    honeycomb structure
13    positioning device
15    electromagnetic means
16    free falling or moving particle

20    particle release device

100    turbo engine
101    high pressure turbine
102    bypass duct
103    casing of the high pressure turbine
104    annular space around casing
105    scoop device

g    Gravity vector
L    air flow

**Claims**

1. Heat transfer device in an aircraft turbo engine (100), wherein
a structure section (2) of the turbo engine (100) comprises surface structure elements (1) to increase the heat transfer area (A) of the structure section (2) and / or to improve the heat transfer (h) from the structure section (2) of the turbo engine (100) to a fluid flow, in particular an air flow (L).

2. Heat transfer device according to claim 1, wherein the surface structure elements (1) comprise a rib structure, a needle structure, a dimple structure and / or a mound structure protruding from the structure section (2) into the fluid flow, in particular the air flow (L).

3. Heat transfer device according to claim 1 or 2, wherein the structure section (2) of the turbo engine (100) with the plurality of the surface structure elements (1) is on a casing (103) of a turbine (101) in the turbo engine (100), in particular a low pressure, an intermediate turbine and / or a high pressure turbine, a honeycomb structure (12), a valve, a sensor, solenoids, shielded cables, engine harnesses and / or an environmental control system.

4. Heat transfer device according to at least one of the preceding claims, wherein the surface structure elements (1) are distributed in a pattern (5), in particular a regular pattern on the structure section (2) of the turbo engine (100).

5. Heat transfer device according to at least one of the preceding claims, wherein the surface structure elements (1) have a characteristic width between 1 mm and 10 mm, in particular between 1 mm and 5 mm, and / or a characteristic height between 0,2 mm to 5 mm, in particular between 0,5 mm and 2 mm.

6. Heat transfer device according to at least one of the preceding claims, wherein the height to width ration of the surface structure elements (1) have a height to width ratio between 0,25 and 0,5.

7. Heat transfer device according to at least one of the preceding claims, wherein the surface structure elements (1) comprise solidified metal, in particular solidified metal, in particular titanium droplets.

8. Heat transfer device according to at least one of the preceding claims, wherein it is part of a tip clearance control system.

9. Method for manufacturing a heat transfer device for an aircraft turbo engine (100), in particular according to at least one of the claims 1 to 8, wherein

a) at least one metal particle (10, 16), in particular a spherical particle (10, 16) is at least partially heated to a temperature above the melting point and the at least one, at least partially molten metal particle (10, 16) is positioned on a structure section (2) of the turbo engine (100) so that
b) it solidifies on the structure section (2) of the turbo engine (100) to form at least one surface structure element (1) on the structure section (2).

10. Method according to claim 9, wherein the heating of the at least one metal particle (10, 16) takes place in a heating device (11), in particular a radiative heater (11) and / or through a heating process on the location at the structure surface (2).

11. Method according to claim 9 or 10, wherein the at least one metal particle (16) is moving under a force field, in particular an artificial gravity field, a magnetic field and / or the earth's gravity field, e.g., in free fall in the natural gravitational field at least partially before the solidification, in particular it is in free fall in

**EP 2 957 728 A1**

the radiative heater (11).

12. Method according to at least one of the claims 9 to 11, wherein there is a relative movement of the structure section (2) between the solidification of two molten metal particles into surface structure elements (1', 1 ") on the structure section (2).

13. Method according to at least one of the claims 9 to 12, wherein a pattern (5), in particular a regular pattern (5) of solidified metal particles (10, 16) is formed as a plurality of surface structure elements (1) on the structure section (2) of the turbo engine (100).

14. Method according to at least one of the claims 9 to 13, wherein for the at least one particle (10, 16) are relative movement is generated to position it at the structure section (2); the relative movement being generated by a positioning device (13) and / or a force field, in particular earth's gravity field (g), an artificial gravity field and / or a magnetic field.

15. Heat transfer device manufactured by a method according to at least one of the claims 9 to 14.

Fig. 1

104    103

## Fig. 2a

104    103

1

5
1

2

## Fig. 2b

(a)    Unheated cold flow in wall jet

Velocity

Temperature

Hot flow in wall jet

Smooth

(b)

Velocity

Temperature

SSE

Thicker region of hot flow

## Fig. 3    1

Fig. 4

Fig. 5

Fig. 6

Fig. 7

Fig. 8

Fig. 9

**EUROPEAN SEARCH REPORT**

Application Number

EP 14 17 3008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/120860 A1 (DONG ZHIFENG [US] ET AL) 8 June 2006 (2006-06-08) <br> * paragraph [0003] - paragraph [0027] * <br> * figures 3-5 * | 1-8 | INV. <br> F01D11/24 <br> F28F13/02 <br> F28F13/18 |
| X | US 5 353 865 A (ADIUTORI EUGENE F [US] ET AL) 11 October 1994 (1994-10-11) <br> * column 1, line 14 - column 10, line 14 * <br> * pages 1-5; figures 1-3 * | 1-15 | |
| A | EP 0 083 091 A2 (LINN HORST) 6 July 1983 (1983-07-06) <br> * page 1 - page 5, line 18 * <br> * page 11, line 2 - page 15, line 20 * <br> * figure 1 * | 9-12,14 | |
| X | EP 1 050 663 A2 (GEN ELECTRIC [US]) 8 November 2000 (2000-11-08) <br> * paragraph [0001] - paragraph [0007] * <br> * paragraph [0070] - paragraph [0074] * <br> * figures 2-3 * | 1-8 | |

TECHNICAL FIELDS SEARCHED (IPC)

F01D
F02K
F28F
B23K

The present search report has been drawn up for all claims

| Place of search | Date of completion of the search | Examiner |
|---|---|---|
| The Hague | 6 November 2014 | Kreissl, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 17 3008

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2014

| Patent document cited in search report | | Publication date | Patent family member(s) | | Publication date |
|---|---|---|---|---|---|
| US 2006120860 | A1 | 08-06-2006 | NONE | | |
| US 5353865 | A | 11-10-1994 | NONE | | |
| EP 0083091 | A2 | 06-07-1983 | NONE | | |
| EP 1050663 | A2 | 08-11-2000 | DE | 60029862 T2 | 08-03-2007 |
| | | | EP | 1050663 A2 | 08-11-2000 |
| | | | JP | 4396875 B2 | 13-01-2010 |
| | | | JP | 2001012207 A | 16-01-2001 |
| | | | TW | 534927 B | 01-06-2003 |
| | | | US | 6468669 B1 | 22-10-2002 |
| | | | US | 2002168537 A1 | 14-11-2002 |
| | | | US | 2004131877 A1 | 08-07-2004 |

For more details about this annex : see Official Journal of the European Patent Office, No. 12/82